# EUROPÄISCHE PATENTSCHRIFT

(11) **EP 3 322 605 B1**
(45) Veröffentlichungstag und Bekanntmachung des Hinweises auf die Patenterteilung: **01.06.2022**
(21) Anmeldenummer: 16760645.8
(22) Anmeldetag: 12.07.2016
(51) Int. Cl.: B60K 6/40

(54) **HYBRIDMODUL FÜR EINEN ANTRIEBSSTRANG EINES KRAFTFAHRZEUGS**
HYBRID MODULE FOR A DRIVE TRAIN OF A MOTOR VEHICLE
MODULE HYBRIDE DESTINÉ À UN GROUPE MOTOPROPULSEUR D'UN VÉHICULE À MOTEUR

(30) Priorität: 13.07.2015 DE 102015213101
(43) Veröffentlichungstag der Anmeldung: 23.05.2018
(73) Patentinhaber: Schaeffler Technologies AG & Co. KG, 91074 Herzogenaurach (DE)
(72) Erfinder: AGNER, Ivo, 77815 Bühl (DE); KELLER, Aurelie, 67240 Oberhoffen Sur Moder (FR)
(86) Internationale Anmeldenummer: PCT/DE2016/200320
(87) Internationale Veröffentlichungsnummer: WO 2017/008808

(56) Entgegenhaltungen:
- DE-A1-102005 053 887
- DE-A1-102010 003 442
- DE-A1-102011 104 243

## Beschreibung

Die vorliegende Erfindung betrifft ein Hybridmodul für einen eine elektrische Maschine, einen Verbrennungsmotor und ein Getriebe aufweisenden Antriebsstrang eines Kraftfahrzeugs, gemäß dem Oberbegriff des Anspruchs 1.

Ein entsprechendes Hybridmodul ist aus der WO 2014/026685 A1 bekannt. Diese Druckschrift zeigt ein Hybridmodul für einen Antriebsstrang eines Kraftfahrzeugs, bei dem eine elektrische Maschine zwischen einem Verbrennungsmotor und einem Getriebe angeordnet ist. Das Hybridmodul weist einen Rotor der elektrischen Maschine und eine innerhalb des Rotors angeordnete Trennkupplung mit einer Anpressplatte und einer Gegenplatte auf. Weiterhin ist im Zusammenhang mit derartigen Hybridmodulen im Antriebsstrang in der Regel eine Kupplungseinrichtung mit mindestens einer Reibkupplung vorgesehen, die ihrerseits eine Anpressplatte und eine Gegenplatte aufweist.

Aus der DE 10 2010 003 442 A1 ist ein Hybridmodul gemäß dem Oberbegriff des Anspruchs 1 bekannt.

Bezüglich weiteren Standes der Technik wird auf die DE 10 2011 104 243 A1 und die DE 10 2005 053 887 A1 verwiesen.

Es ist Aufgabe der Erfindung ein einfach aufbaubares und dabei kompaktes Hybridmodul mit Komponenten zur Drehmomentübergabe an mindestens eine Getriebeeingangswelle anzugeben.

Die Lösung der Aufgabe erfolgt erfindungsgemäß durch die Merkmale des unabhängigen Anspruchs. Bevorzugte Ausgestaltungen der Erfindung sind in den Unteransprüchen angegeben, die jeweils einzeln oder in Kombination einen Aspekt der Erfindung darstellen können.

Bei einem Hybridmodul ist erfindungsgemäß vorgesehen, dass die Gegenplatte oder, im Fall von mehreren Gegenplatten, mindestens eine der Gegenplatten der Kupplungseinrichtung mit dem Rotorelement verbunden ist. Diese Verbindung ist dabei vorzugsweise eine direkte bzw. unmittelbare bzw. zwischenelemente-freie Verbindung, bei der kein Zwischenelement zur Überbrückung eines Axialabstandes zwischen Rotor und Gegenplatte der Kupplungsreinrichtung vorgesehen ist. Somit wird ein Koppeln der elektrischen Maschine des Hybridmoduls und der Kupplungseinrichtung mit minimal erforderlichem Bauraum erreicht. Die Kupplungseinrichtung kann durch diese Maßnahme in den Stator der elektrischen Maschine hineinragen.

Das Rotorelement ist bevorzugt der Rotor der elektrischen Maschine oder ein anderes von der elektrischen Maschine antreibbares Rotorelement, insbesondere eine über einen Riementrieb antreibbare Rolle.

Es ist erfindungsgemäß vorgesehen, dass das Hybridmodul ein gemeinsames Bauteil der Trennkupplung und der Kupplungseinrichtung aufweist, das die Gegenplatte der Trennkupplung und die mit dem Rotorelement verbundene Gegenplatte der Kupplungseinrichtung bildet. Hierbei ergibt sich ein besonders kompakter Aufbau.

Vorzugsweise ist vorgesehen, dass die Verbindung zwischen dem Rotorelement und der Gegenplatte als eine direkte Verbindung zwischen einem Rotorblech des Rotorelements und der Gegenplatte realisiert ist.

Vorzugsweise ist vorgesehen, dass die (direkte) Verbindung zwischen dem Rotorelement und der Gegenplatte als Schweiß-, Niet- oder Schraubverbindung oder einer beliebigen Kombination von diesen ausgebildet ist.

Alternativ ist das Rotorelement mit der Gegenplatte der Kupplungseinrichtung verschraubt oder vernietet. Hier wird, wie erfindungsgemäß vorgesehen (wenn die Trennkupplung bzw. K0-Trennkupplung gedanklich in Richtung der Kupplungseinrichtung verschoben wird) die Gegenplatte der Trennkupplung weggelassen werden, wodurch die Scheibe der Trennkupplung direkt gegen die (Rückseite der) Gegenplatte der Kupplungseinrichtung gedrückt wird.

Generell kann die Kupplungseinrichtung als Einfach- oder als Mehrfachkupplung ausgebildet sein. Vorzugsweise ist die Kupplungseinrichtung als Mehrfachkupplung mit mehreren Kupplungen, insbesondere als Doppelkupplung mit zwei Kupplungen (Kupplungseinheiten) ausgebildet. Dabei ist mit Vorteil vorgesehen, dass eine weitere Gegenplatte der Kupplungseinrichtung über mindestens ein Zwischenelement mit dem Rotorelement verbunden ist.

Vorzugsweise weist das Hybridmodul eine Einheit aus dem Rotorelement, der Trennkupplung und einem die Gegenplatte der Kupplungseinrichtung umfassenden Kupplungsteil, sowie einer zentralen Lagereinrichtung im Rotorelement auf, über die die Einheit in einer Gehäuseeinheit des Hybridmoduls drehbar gelagert ist.

Vorzugsweise ist vorgesehen, dass die Trennkupplung als hydraulisch betätigbare Kupplung ausgebildet ist.

Vorzugsweise weist das Hybridmodul eine als Concentric Slave Cylinder (CSC) ausgeführte Ausrückvorrichtung zur Betätigung der Trennkupplung mittels eines Drucktopfs auf. Die Trennkupplung kann hydraulisch über ein CSC mit kurzen Kolben betätigt werden. Hierdurch kann mittels eines Kippfreiheitsgrades Schieflagen des Betätigungssystems der Trennkupplung ausgeglichen werden.

Die Trennkupplung selbst kann mittels eines Drucktopfes ohne zusätzliche Hebelübersetzung betätigt werden. Aufgrund geringer Hysterese durch die Direktbetätigung ist die Trennkupplung dann druckregelbar. CSC und Einrücklager sind bevorzugt radial geschachtelt.

Vorzugsweise ist schließlich vorgesehen, dass das Hybridmodul ein der Trennkupplung im Antriebsstrang vorgeschaltetes Zweimassenschwungrad aufweist.

Eine Ausführungsform der Erfindung, auf die diese Erfindung aber nicht beschränkt ist und aus der sich weitere erfindungsgemäße Merkmale ergeben können, ist in der folgenden Figur gezeigt.

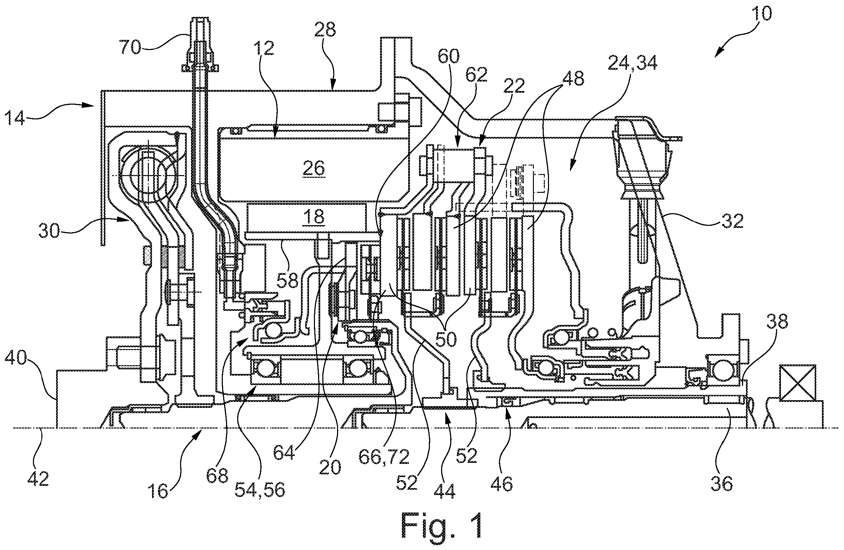

Es zeigt die
- Fig.1:: ein Hybridmodul gemäß einer bevorzugten Ausführungsform der Erfindung.

Die Fig. 1 zeigt einen Teil eines Antriebsstranges 10 eines Kraftfahrzeugs in einer Schnittdarstellung. Bei dem Antriebsstrang 10 ist eine elektrische Maschine 12 zwischen einem (nicht gezeigten) Verbrennungsmotor und einem (ebenfalls nicht gezeigten) Getriebe angeordnet. Die elektrische Maschine 12 dient als Antriebsmaschine und ist Teil eines Hybridmoduls 14. Dieses Hybridmodul 14 weist die folgenden Hauptkomponenten auf: (i) eine Funktionseinheit 16 mit einem als Rotor (Läufer) der elektrischen Maschine 12 ausgebildeten Rotorelement 18, einer innerhalb des Rotorelements 18 angeordneten Trennkupplung 20 und zumindest einem mit dem Rotorelement 18 drehfest verbundenen Kupplungsteil 22 einer Kupplungseinrichtung 24, (ii) eine die Moduleinheit 16 und einen Stator (Ständer) 26 der elektrischen Maschine 12 teilweise einhausende Gehäuseeinheit 28, (iii) ein der Trennkupplung 20 im Antriebsstrang 10 vorgeschaltetes Zweimassenschwungrad 30, sowie (iv) ein die Anfahrkupplung 24 einhausendes Gehäuseteil des Getriebes 32. Die Kupplungseinrichtung 24 ist als Doppelkupplung 34 ausgebildet. Dementsprechend ist das Getriebe als Doppelkupplungsgetriebe ausgebildet, von dem nur die beiden Getriebeeingangswellen 36, 38 dargestellt sind.

Es ergibt sich folgender Pfad des Antriebsstrangs: Abtriebswelle 40 des Verbrennungsmotors - Zweimassenschwungrad 30 - Trennkupplung 20-Rotorelement 18 (hier Rotor der als Innenläufer ausgebildeten elektrischen Maschine 12) - Kupplungseinrichtung 24 - Getriebeeingangswelle 36, 38. Die entsprechenden Wellen 36, 38, 40 liegen dabei auf einer gemeinsamen Achse 42, die die Hauptachse des Hybridmoduls 14 bildet.

Die als Doppelkupplung 34 ausgebildete Kupplungseinrichtung 24 weist zwei Kupplungen 44, 46 mit entsprechenden Anpressplatten 48, Gegenplatten 50, Kupplungsscheiben 52 und Betätigungseinrichtungen auf.

Das Rotorelement 18 weist in seinem Inneren eine Rotorlagerung 54 auf, die als zentrale Lagereinrichtung 56 dient, über die die gesamte Moduleinheit 16 in der Gehäuseeinheit 28 drehbar gelagert ist. Die drehfeste Verbindung zwischen Rotorelement 18 und Kupplungsteil 22 ist in diesem Beispiel als eine direkte Verbindung 60 zwischen einem Rotorblech 58 des Rotorelements 18 und einer der Gegenplatten 50 der Anfahrkupplung 24, nämlich die Gegenplatte der ersten Kupplung 44, realisiert. Zwischen dem Rotorelement 18 und einer anderen Gegenplatte 50, d.h. der Gegenplatte der zweiten Kupplung 46, ergibt sich eine Verbindung über Zwischenelemente 62. Die Gegenplatte 50 der ersten Kupplung 44 und die Gegenplatte 50 der zweiten Kupplung 46 sind somit auch über diese Zwischenelemente 62 miteinander verbunden.

Die Trennkupplung 20 ist hydraulisch betätigbar. Die Trennkupplung 20 weist eine Anpressplatte 64 und eine Gegenplatte 66 auf und wird mittels einer Ausrückvorrichtung 68 über einen Druckanschluss 70 betätigt. Die Ausrückvorrichtung 68 weist ein Ausrücklager, eine Zentralausrückereinheit mit einem Kolben zur Kraftübertrag auf das Ausrücklager sowie einen Drucktopf zur Kraftübertragung von dem Ausrücklager auf die Anpressplatte der Trennkupplung 20 auf. Die Kraftübertragung mittels dieses Drucktopfs ist eine hebelwirkungsfreie Kraftübertragung.

Die eine der Gegenplatten 50 der Kupplungseinrichtung 24 ist mit dem Rotorelement 18 verbunden. Die Verbindung der einen Gegenplatte 50 der Kupplungseinrichtung 24 mit dem Rotorelement 18 ist dabei eine Verbindung, bei der kein Zwischenelement zur Überbrückung eines Axialabstandes zwischen Rotorelement 18 bzw. Trennkupplung 20 und der Gegenplatte 50 der Kupplungseinrichtung 24 vorgesehen ist (direkte bzw. unmittelbare bzw. zwischenelemente-freie Verbindung). Somit wird ein Koppeln der elektrischen Maschine 12 und der Trennkupplung 20 des Hybridmoduls 14 und der Anfahrkupplung 24 mit minimal erforderlichem (axialen) Bauraum erreicht. Die Kupplungseinrichtung 24 kann durch diese Maßnahme in den Stator 26 der elektrischen Maschine 12 hineinragen.

### Bezugszeichenliste

- 10: Antriebsstrang
- 12: Maschine, elektrisch
- 14: Hybridmodul
- 16: Funktionseinheit
- 18: Rotorelement
- 20: Trennkupplung
- 22: Kupplungsteil
- 24: Kupplungseinrichtung
- 26: Stator, elektr. Maschine
- 28: Gehäuseeinheit
- 30: Zweimassenschwungrad
- 32: Gehäuseteil (Getriebe)
- 34: Doppelkupplung
- 36: Getriebeeingangswelle, erste
- 38: Getriebeeingangswelle, zweite
- 40: Abtriebswelle
- 42: Achse
- 44: Kupplung, erste
- 46: Kupplung, zweite
- 48: Anpressplatte
- 50: Gegenplatte
- 52: Kupplungsscheibe
- 54: Rotorlagerung
- 56: Lagereinrichtung, zentral (Moduleinheit)
- 58: Rotorblech
- 60: Verbindung
- 62: Zwischenelement
- 64: Anpressplatte (Trennkupplung)
- 66: Gegenplatte (Trennkupplung)
- 68: Ausrückvorrichtung
- 70: Druckanschluss
- 72: Bauteil, gemeinsames

## Patentansprüche

1. Hybridmodul (14) für einen eine elektrische Maschine (12), einen Verbrennungsmotor und ein Getriebe aufweisenden Antriebsstrang (10) eines Kraftfahrzeugs, wobei das Hybridmodul (14) aufweist:
ein mittels der elektrischen Maschine (12) antreibbares Rotorelement (18),
eine innerhalb des Rotorelements (18) angeordnete Trennkupplung (20) mit einer Anpressplatte (64) und einer Gegenplatte (66) und
eine Kupplungseinrichtung (24) mit mindestens einer eine Anpressplatte (48) und eine Gegenplatte (50) umfassenden Kupplung (44, 46),
**dadurch gekennzeichnet, dass**
die Gegenplatte (50) der Kupplungseinrichtung (24) mit dem Rotorelement (18) verbunden ist, und
ein gemeinsames Bauteil (72) der Trennkupplung (20) und der Kupplungseinrichtung (24) vorgesehen ist, das die Gegenplatte (66) der Trennkupplung (20) und die mit dem Rotorelement (18) verbundene Gegenplatte (50) der Kupplungseinrichtung (24) bildet.

2. Hybridmodul nach Anspruch 1, **dadurch gekennzeichnet, dass** die Verbindung (60) zwischen dem Rotorelement (18) und der Gegenplatte (50) als eine direkte Verbindung zwischen einem Rotorblech (58) des Rotorelements (18) und der Gegenplatte (50) realisiert ist.

3. Hybridmodul nach Anspruch 1 oder 2, **dadurch gekennzeichnet, dass** die Verbindung (60) zwischen dem Rotorelement (18) und der Gegenplatte (22) als Schweiß-, Niet- oder Schraubverbindung oder einer beliebigen Kombination von diesen ausgebildet ist.

4. Hybridmodul nach einem der Ansprüche 1 bis 3, **dadurch gekennzeichnet, dass** die Kupplungseinrichtung (24) als eine Mehrfachkupplung mit mehreren Kupplungen (44, 46), vorzugsweise als Doppelkupplung (34) mit zwei Kupplungen (44, 46), ausgebildet ist.

5. Hybridmodul nach Anspruch 4, **dadurch gekennzeichnet, dass** eine weitere Gegenplatte (50) der Kupplungseinrichtung (24) über mindestens ein Zwischenelement (62) mit dem Rotor (18) der elektrischen Maschine (12) verbunden ist.

6. Hybridmodul nach einem der Ansprüche 1 bis 5, **gekennzeichnet durch** eine Funktionseinheit (16) aus dem Rotor (18), der Trennkupplung (20) und einem die Gegenplatte (50) der Kupplungseinrichtung (24) umfassenden Kupplungsteil (22), sowie einer zentralen Lagereinrichtung (54) in dem Rotorelement (18), über die die Einheit (16) in einer Gehäuseeinheit (28) des Hybridmoduls drehbar gelagert ist.

7. Hybridmodul nach einem der Ansprüche 1 bis 6, **dadurch gekennzeichnet, dass** die Trennkupplung (20) als eine hydraulisch betätigbare Kupplung ausgebildet ist.

8. Hybridmodul nach einem der Ansprüche 1 bis 7, **gekennzeichnet durch** eine als Concentric Slave Cylinder ausgeführte Ausrückvorrichtung (62) zur Betätigung der Trennkupplung (20).

9. Hybridmodul nach einem der Ansprüche 1 bis 8, **gekennzeichnet durch** ein der Trennkupplung (20) in dem Antriebsstrang (10) vorgeschaltetes Zweimassenschwungrad (30).

## Claims

1. A hybrid module (14) for a drive train (10) of a motor vehicle, having an electric motor (12), an internal combustion engine and a transmission, the hybrid module (14) having:
a rotor element (18) which can be driven by means of the electric motor (12),
a separating clutch (20) arranged within the rotor element (18) having a pressure plate (64) and a counter plate (66) and
a coupling device (24) having at least one coupling (44, 46) comprising a pressure plate (48) and a counter plate (50),
**characterised in that**
the counter plate (50) of the coupling device (24) is connected to the rotor element (18), and a common component (72) of the separating clutch (20) and the coupling device (24) is provided, which forms the counter plate (66) of the separating clutch (20) and the counter plate (50) of the coupling device (24) connected to the rotor element (18).

2. The hybrid module according to Claim 1, **characterised in that** the connection (60) between the rotor element (18) and the counter plate (50) is realised as a direct connection between a rotor lamination (58) of the rotor element (18) and the counter plate (50).

3. The hybrid module according to Claim 1 or 2, **characterised in that** the connection (60) between the rotor element (18) and the counter plate (22) is formed as a welded, rivet or screw connection, or any combination of these.

4. The hybrid module according to one of Claims 1 to 3, **characterised in that** the coupling device (24) is designed as a multiple clutch with a plurality of couplings (44, 46), preferably as a double clutch (34) with two couplings (44, 46).

5. The hybrid module according to Claim 4, **characterised in that** a further counter plate (50) of the coupling device (24) is connected to the rotor (18) of the electric motor (12) via at least one intermediate element (62).

6. The hybrid module according to one of Claims 1 to 5, **characterised by** a functional unit (16) consisting of the rotor (18), the separating clutch (20) and a coupling part (22) comprising the counter plate (50) of the coupling device (24), and of a central bearing device (54) in the rotor element (18), via which the unit (16) is rotatably mounted in a housing unit (28) of the hybrid module.

7. The hybrid module according to one of Claims 1 to 6, **characterised in that** the separating clutch (20) is designed as a hydraulically actuatable clutch.

8. The hybrid module according to one of Claims 1 to 7, **characterised by** a release device (62) designed as a concentric slave cylinder for actuating the separation clutch (20).

9. The hybrid module according to one of Claims 1 to 8, **characterised by** a two-mass flywheel (30) arranged upstream of the separating clutch (20) in the drive train (10).

## Revendications

1. Module hybride (14) pour une chaîne cinématique (10) d'un véhicule à moteur comportant une machine (12) électrique, un moteur à combustion interne et une transmission, dans lequel le module hybride (14) comporte :
un élément de rotor (18) pouvant être entraîné par la machine (12) électrique,
un embrayage de séparation (20) agencé à l'intérieur de l'élément de rotor (18) comportant une plaque de pression (64) et une contre-plaque (66) et
un dispositif d'embrayage (24) comportant au moins un embrayage (44, 46) comportant une plaque de pression (48) et une contre-plaque (50),
**caractérisé en ce que**
la contre-plaque (50) du dispositif d'embrayage (24) est reliée à l'élément de rotor (18) et un composant (72) commun de l'embrayage de séparation (20) et du dispositif d'embrayage (24) forme la contre-plaque (66) de l'embrayage de séparation (20) et la contre-plaque (50) du dispositif d'embrayage (24) reliée à l'élément de rotor (18).

2. Module hybride selon la revendication 1, **caractérisé en ce que** la liaison (60) entre l'élément de rotor (18) et la contre-plaque (50) est réalisée sous forme de liaison directe entre une tôle rotorique (58) de l'élément de rotor (18) et la contre-plaque (50).

3. Module hybride selon la revendication 1 ou 2, **caractérisé en ce que** la liaison (60) entre l'élément de rotor (18) et la contre-plaque (22) est conçue sous forme de liaison par soudure, par rivetage ou par vissage ou une quelconque combinaison de celles-ci.

4. Module hybride selon l'une quelconque des revendications 1 à 3, **caractérisé en ce que** le dispositif d'embrayage (24) est conçu sous forme de mécanisme à embrayages multiples comportant plusieurs embrayages (44, 46), de préférence en sous forme d'embrayage double (34) comportant deux embrayages (44, 46).

5. Module hybride selon la revendication 4, **caractérisé en ce qu'**une autre contre-plaque (50) du dispositif d'embrayage (24) est reliée par au moins un élément intermédiaire (62) au rotor (18) de la machine (12) électrique.

6. Module hybride selon l'une quelconque des revendications 1 à 5, **caractérisé par** une unité fonctionnelle (16) composée du rotor (18), de l'embrayage de séparation (20) et d'une pièce d'embrayage (22) comportant la contre-plaque (50) du dispositif d'embrayage (24), ainsi que d'un dispositif de palier (54) central dans l'élément de rotor (18), par lequel l'unité (16) est logée rotative dans une unité de logement (28) du module hybride.

7. Module hybride selon l'une quelconque des revendications 1 à 6, **caractérisé en ce que** l'embrayage de séparation (20) est conçu sous forme d'embrayage à actionnement hydraulique.

8. Module hybride selon l'une quelconque des revendications 1 à 7, **caractérisé par** un dispositif de débrayage (62) réalisé sous forme de cylindre récepteur concentrique (Concentric Slave Cylinder) destiné à l'actionnement de l'embrayage de séparation (20).

9. Module hybride selon l'une quelconque des revendications 1 à 8, **caractérisé par** un volant bimasse (30) monté en amont de l'embrayage de séparation (20) dans la chaîne cinématique (10).
